# EUROPÄISCHE PATENTSCHRIFT

(11) **EP 1 303 425 B1**
(45) Veröffentlichungstag und Bekanntmachung des Hinweises auf die Patenterteilung: **19.10.2005**
(21) Anmeldenummer: 01960452.9
(22) Anmeldetag: 04.07.2001
(51) Int. Cl.: B60N 2/36, B60R 5/04

(54) **VORRICHTUNG ZUR TEILUNG DES HINTER EINEM SITZ BEFINDLICHEN LADERAUMS IN EINEM FAHRZEUG, INSBESONDERE IN EINEM PKW**
DEVICE FOR DIVIDING THE STORAGE SPACE BEHIND A SEAT IN A VEHICLE, ESPECIALLY A PRIVATE CAR
DISPOSITIF PERMETTANT DE DIVISER L'ESPACE A BAGAGES SE TROUVANT DERRIERE UN SIEGE DANS UN VEHICULE, EN PARTICULIER UN VEHICULE DE TOURISME

(30) Priorität: 27.07.2000 DE 10036544
(43) Veröffentlichungstag der Anmeldung: 23.04.2003
(73) Patentinhaber: Johann Borgers GmbH & Co. KG, 46393 Bocholt (DE)
(72) Erfinder: MAIBOM, Mark, 46399 Bocholt (DE)
(74) Vertreter: Mentzel, Norbert
(86) Internationale Anmeldenummer: PCT/EP2001/007614
(87) Internationale Veröffentlichungsnummer: WO 2002/009969

(56) Entgegenhaltungen:
- EP-A- 0 927 663
- WO-A-01/40023
- DE-A- 4 202 103
- FR-A- 2 785 243

## Beschreibung

Die Erfindung richtet sich auf eine Vorrichtung der im Oberbegriff des Anspruches 1 angegebenen Art. Der Innenraum von Fahrzeugen ist einerseits über sein Volumen und andererseits durch seine Nutzbarkeit definiert. Das Volumen ergibt sich aus der inneren Raumform, die durch die inneren Bauteile, wie Sitze, bestimmt ist. Für die Nutzbarkeit ist vor allem der Laderaum hinter der Rückenlehne eines Sitzes maßgeblich.

Eine Vorrichtung dieser Art ist aus der US-A-4,443,034 bekannt. Der Ladebodenteil ist dort mit einem Scharnier an der oberen Kante der Rückenlehne befestigt. Dadurch ist die Rückfläche der Rückenlehne auch in der wirksamen Position des Ladebodenteils abgedeckt und kann daher nicht als Ladeboden fungieren. Stützmittel sind im Bereich der Unterkante der Rücklehne angeordnet, die eingeklappt und ausgeklappt werden können. Man erhält hier zwar in ladewirksamer Position einen durchgehenden Boden, doch ist dann der Fahrzeugboden selbst nicht mehr als Ladefläche nutzbar.

Aus Firmenschrift Daimler-Benz AG, VP/KW 6701·1403·00-00/0897, "Die Mercedes-Benz A-Klasse" S. 36 und 37 ist eine Vorrichtung anderer Art bekannt, wo ein Ladebodenteil aus einer Abdeckung einer vertieften Wanne im Fahrzeugboden gebildet wird. Dieser Ladebodenteil ist schauseitig mit einer Teppichlage verkleidet, die sich in den Fahrzeugboden unterhalb des Sitzes fortsetzt. Dadurch entsteht an der Übergangsstelle zwischen dem Ladebodenteil und dem Fahrzeugboden unterhalb des Sitzes ein sogenanntes "Filmscharnier" durch den Teppich. Klappt man bei normaler Lage des Sitzes den Ladebodenteil hoch, so stößt er gegen die Rückenlehne des Sitzes. Man kann dann zwar den in der Wanne, unterhalb des Ladebodens befindlichen Unter-Laderaum zur Aufnahme von Lasten nutzen, doch ist die Hochklapplage nicht gesichert. Man muss den hochgeklappten Ladebodenteil z.B. durch eine Schnur festbinden, was mühsam ist. Um einen großen Laderaum zu gewinnen, müssen sowohl der Sitzteil als auch die Rückenlehne aus ihrer Gebrauchslage doppelt umgelegt werden. Man kann den Ladebodenteil nicht in eine seine Hochklapplage übertreffende Überklappstellung überführen, weil dies das vom Teppich gebildete Scharnier überstrapaziert. In jedem Fall ergibt sich in Hochklapplage des Ladebodenteils ein sehr unattraktives Aussehen des Fahrzeuginnenraums, weshalb man die Hochklapplage nur im Notfall, nicht aber im Normalfall benutzt. Man begnügt sich im Normalfall daher mit dem Teilraum oberhalb des die vertiefte Wanne abdeckenden Ladebodenteils. Die Wanne wird normalerweise nur zur Ablage von wichtigen Utensilien des Fahrzeugs dauerhaft genutzt, wie Pannenwerkzeugen, die man gerne durch den die Wanne verschließenden Ladebodenteil unsichtbar macht.

Aus der EP 0 927 663 A1 ist ein loser Ladebodenteil bekannt, der an einem Absatz der Rückenlehne einerseits und Stützmitteln an der Fahrzeugkarosserie andererseits abgestützt werden kann. Ein echtes Scharnier zwischen der Rückseite der Rückenlehne und dem Ladebodenteil fehlt. Wird der Ladebodenteil entfernt, so bleibt die Nutzfläche des Ladebodens störend sichtbar. Der unbenutzte Ladebodenteil ist sperrig.

Aus der FR 2 785 243 A1 sind zwar sowohl ortsfeste Stützen an der Innenwand des Fahrzeugs als auch ein Höhenabstand einer Platte bekannt, doch dienen diese Mittel nicht dazu, um Teilräume im Fahrzeug zu schaffen, in welche der Gesamt-Laderaum sich gliedern ließe.

Aus der US 5,931,527 A ist es bekannt, einen Klapptisch über Gelenkarme mit der Rückenlehne zu verbinden. Die der Rückenlehne zugekehrte Kante des Tisches ist über ein Zahnrad, eine Zahnstange und Getriebe gegenüber der Rückenlehne höher verstellbar. Ein Scharnier zwischen der Tischplatte und der Rückenlehne fehlt. Ortsfeste Stützflächen für den Tisch, der schwere Lasten aufnehmen könnte, sind nicht vorgesehen.

Der Erfindung liegt die Aufgabe zugrunde, eine zuverlässige Vorrichtung der im Oberbegriff des Anspruches 1 genannten Art zu entwickeln, die sowohl in der ladewirksamen als auch in der ladeunwirksamen Klapplage ein attraktives Aussehen hat und sich zwischen diesen beiden Lagen bequem verstellen und zuverlässig positionieren lässt. Dies wird durch die im Anspruch 1 angegebenen Merkmale erreicht, denen folgende besondere Bedeutung zukommt.

Bei der Erfindung ist das Scharnier vom Ladenbodenteil an der Unterkante der Rückenlehne angeordnet, wo sich auch die Gelenkachse des Sitzes befindet. Dadurch liegt eine Baueinheit aus dem Sitz und dem Ladeboden vor. Diese Baueinheit wird von einem System-Lieferanten komplett hergestellt. Der Abnehmer braucht nur für die ohnehin erforderliche Montage des Sitzes im Fahrzeuginneren zu sorgen. In der unwirksamen Position ist die Nutzfläche zur vom Ladeboden zur Rückenfläche der Rückenlehne gerichtet und daher unsichtbar. Es liegt dann die Anklapplage des Ladebodenteils in der Baueinheit vor. In der Abklapplage des Ladebodenteils liegen sowohl die Nutzfläche vom Ladebodenteil als auch die Rückenfläche der Rückenlehne frei, wodurch der Gesamt-Ladeboden gegenüber dem Fahrzeugboden in zwei übereinander liegende Teilräume gegliedert wird. In dieser wirksamen Position wird der Ladebodenteil von Stützschultern an einer Innenwand des Fahrzeugs abgestützt.

Weitere Maßnahmen und Vorteile der Erfindung ergeben sich aus den Unteransprüchen, der nachfolgenden Beschreibung und den Zeichnungen. In den Zeichnungen ist die Erfindung schematisch in mehreren Ausführungsbeispielen und Positionen dargestellt. Es zeigen:
- Fig. 1: die Seitenansicht eines Fahrzeugs mit dem erfindungsgemäßen Sitz, der als Baueinheit mit dem Ladebodenteil ausgebildet ist, und zwar in einer ersten Position,
- Fig. 2, 3 + 4: die gleichen Ansichten der in Fig. 1 gezeigten Baueinheit, wenn sich der Ladebodenteil bzw. die Rückenlehne des Sitzes in drei weiteren Positionen befinden,
- Fig. 5,: teilweise im Ausbruch, die perspektivische Ansicht eines zur Baueinheit von Fig. 1 gehörenden Ladebodenteils,
- Fig. 6,: in einer Vergrößerung gegenüber Fig. 5 und im Ausbruch einen schematischen Querschnitt durch den Ladebodenteil längs der Schnittlinie VI - VI von Fig. 5,
- Fig. 7,: in einer der Fig. 1 entsprechenden Darstellung, eine zweite Ausführungsform der erfindungsgemäßen Baueinheit in einer ersten Position und
- Fig. 8: die in Fig. 7 gezeigte Baueinheit, wenn sich die Bauteile in einer zweiten Position befinden.

Ein Fahrzeugboden 15 besitzt an einer definierten Stelle einen Sitz 10, der sich in einen Sitzflächenteil 11 und eine Rückenlehne 12 gliedert. Diese Teile 11, 12 sind ihrerseits gepolstert und besitzen eine nachgiebige Sitzfläche 13 am Sitzteil und eine ebenfalls gepolsterte Anlehnfläche 14 an der Rückenlehne 12. Im Fahrzeugboden kann eine Wanne 16 integriert sein, die fallweise von einer Abdeckung 17 verschlossen ist. Dazu sind im Wanneninneren Innenschultern 18 vorgesehen.

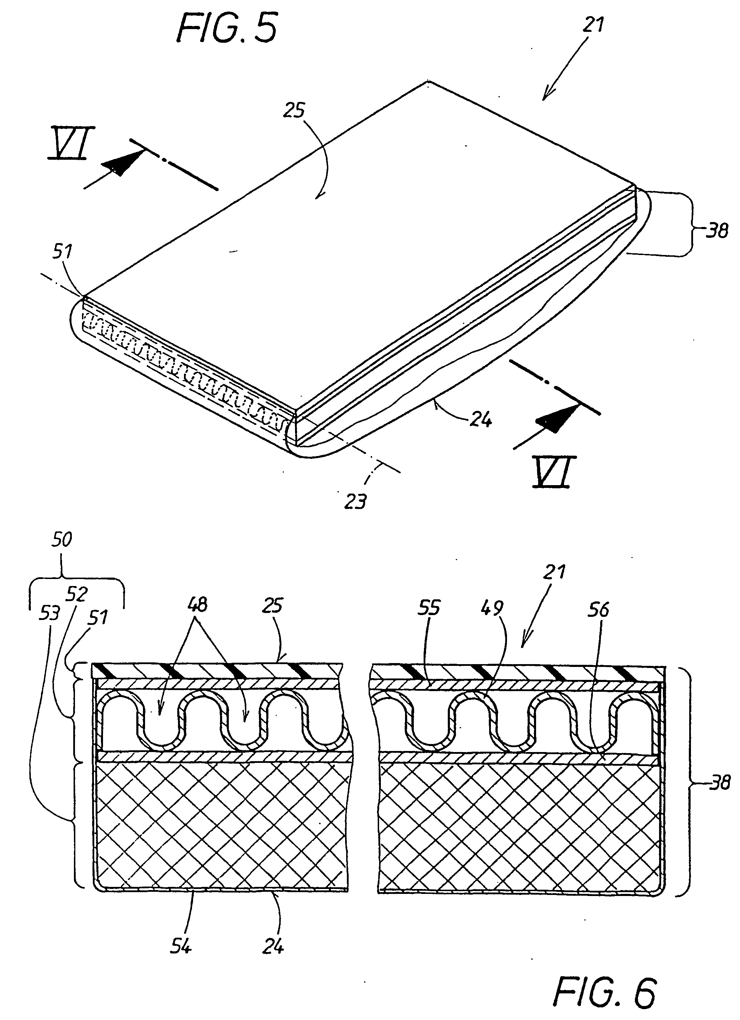

An der Rückseite des Sitzes 10 ist ein Ladebodenteil 21 über ein Scharnier 22 befestigt. In diesem Fall ist der Ladebodenteil 21 über das Scharnier 22 an der Rückenlehne 12 angelenkt. Das Scharnier 22 bestimmt eine im wesentlichen horizontal verlaufende Klappachse 23, wie durch die Strichpunktlinie in Fig. 5 veranschaulicht ist. Auf diese Weise bildet der Sitzflächenteil 11, die Rückenlehne 12 und der daran integrierte Ladebodenteil 21 eine Baueinheit 20, die komplett für sich vormontierbar ist. Das Scharnier 22 befindet sich im unteren Bereich der Rückenlehne. 12.

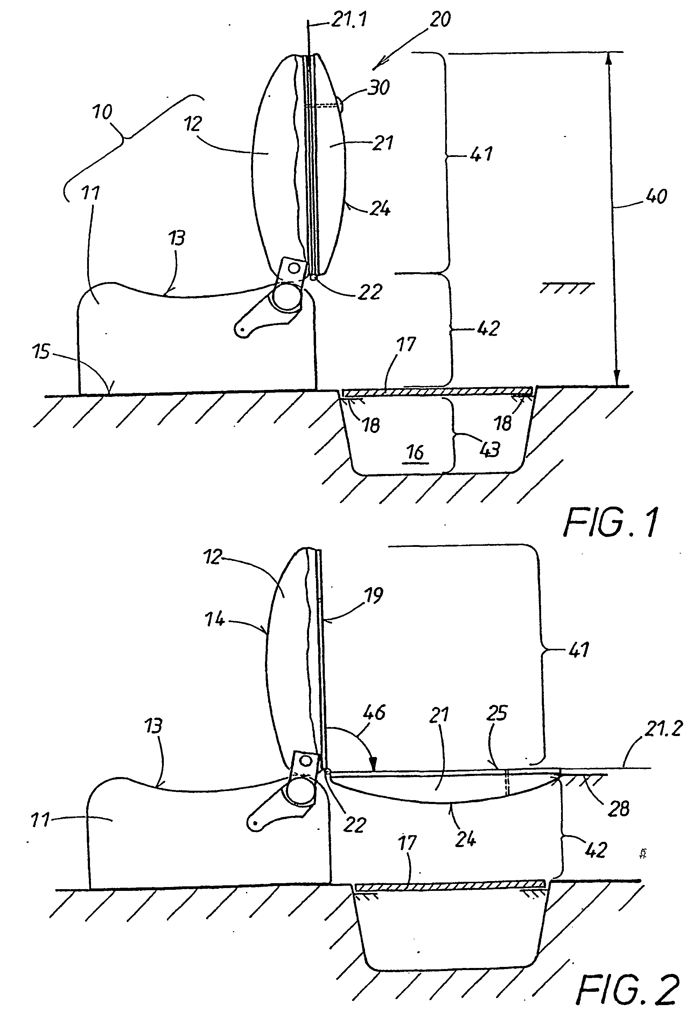

Der Ladebodenteil 21 nimmt normalerweise die in Fig. 1 erkennbaren Lage ein, wo er mit seiner aus Fig. 2 erkennbaren Nutzfläche 25 an der Rückfläche 19 der Rückenlehne 12 bündig anliegt. Diese Anklapp-Position ist durch die Hilfslinie 21.1 in Fig. 1 gekennzeichnet und soll mit "Anklapplage" des Ladebodenteils 21 bezeichnet werden. Im oberen Bereich der aneinandergekIappten Bauteile 12, 21 befinden sich Haltemittel 30. Der Nutzfläche 25 gegenüberliegend befindet sich eine Zierfläche 24 am Ladebodenteil 21, die in der Anklapplage von Fig. 1 sichtbar ist. Diese Zierfläche 24 ist formmäßig und strukturmäßig den räumlichen Formen und Flächen im Sitzbereich bzw. der Karosserie im Laderaum 40 angepasst. Außerdem hat die Rückenlehne 12 die besagte schalldämpfende und schalldämmende Funktion.

Durch Lösen der Fixiermittel 30 lässt sich der Ladebodenteil 21 um das Scharnier 22 über einen Winkel 46, in die aus Fig. 2 ersichtliche Abklapplage überführen, welche durch die entsprechende Hilfslinie 21.2 verdeutlicht ist. Dann ist der bis zur Oberkante der Rückenlehne 12 reichende Laderaum 40 in zwei Teilräume 41, 42 gegliedert. Gegenüber der als Unter Ladeboden fungierenden Abdeckung 17 nimmt der Ladebodenteil 21 eine übergeordnete Stellung an und erweist sich somit als gegenüber 17. In seiner aus Fig. 2 ersichtlichen abragenden Lage stützt sich der Ladebodenteil 21 an seinem freien Randbereich an einer Schulter 28 im Karosserie-Inneren ab.

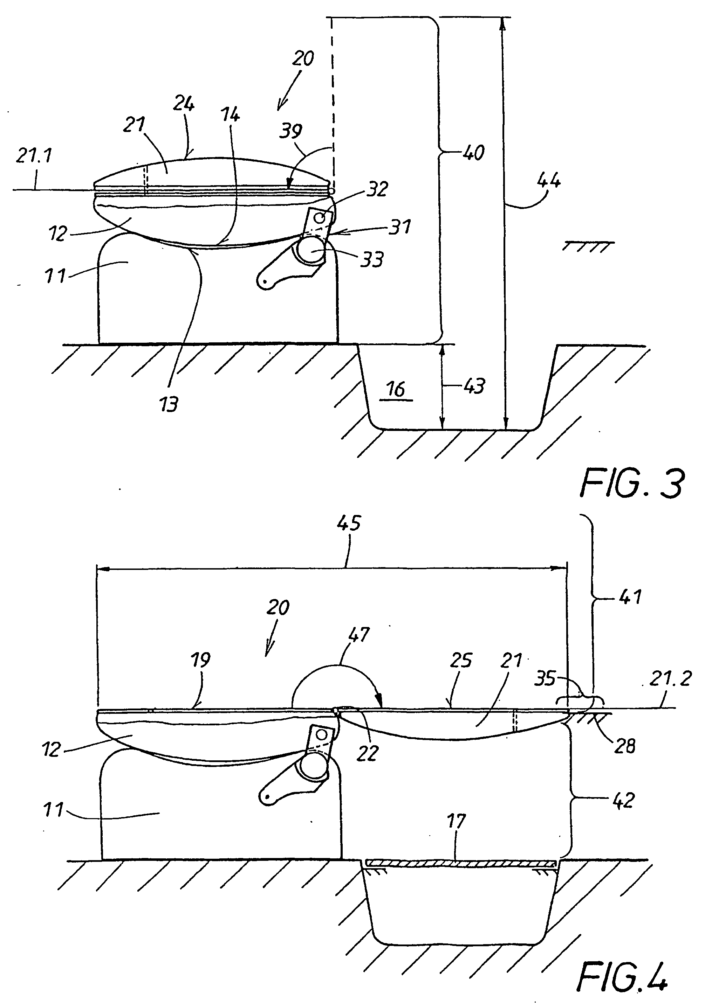

Wie aus Fig. 3 hervorgeht, besteht zwischen dem Sitzflächenteil 11 und der Rückenlehne 12 ein Gelenkbeschlag 31. Dieser bestimmt eine Gelenkachse 32. Über ein nicht näher gezeigtes Getriebe im Gelenkbeschlag 31 kann die Rückenlehne 12 in verschiedene Neigungspositionen überfuhrt werden. Zur Betätigung hierfür dient z.B. eine aus Fig. 3 ersichtliche Handhabe 33. Es versteht sich, dass dafür auch motorische Handhabungsmittel verwendet werden können. Über die Handhabe 33 kann die in Anklapp-Position befindliche Baugruppe aus der Rückenlehne 21 und dem Ladebodenteil 21 um einen Winkel 39 in eine aus Fig. 3 erkennbare flache Position überführt werden, wo sich die Anlehnfläche 14 von 12 einerseits und die Sitzfläche 13 von 11 andererseits berühren. Diese Baugruppe 21, 12 kann hier eine im wesentlichen horizontale Position einnehmen.

In Fig. 3 ist außerdem die Abdeckung 17 der Wanne 16 entfernt. Dadurch ergibt sich ein um die Wanhentiefe 43 vergrößerter Gesamt-Laderaum. Es steht mindestens die Höhe 44 von Fig. 3 zur Aufnahme von Ladegut zur Verfügung. Das Ladegut kann sich sogar in den Raumbereich oberhalb der flachliegenden Zierfläche 24 des Ladebodenteils 21 erstrecken.

Aussehend von Fig. 3 lässt sich dann die erfindungsgemäße Baueinheit 20 in ihrer aus Fig. 4 ersichtliche weitere Position überführen. Dazu wird der Ladebodenteil 21 um einen gegenüber Fig. 2 doppelten Winkel 47 von der Rückenlehne 12 um sein Scharnier 22 abgeklappt. Der Laderaum 40 wird wieder in zwei, bereits aus Fig. 2 ersichtliche Teilhöhen 41, 42, gegliedert, sofern die Abdeckung 17 wie in Fig. 2 positioniert ist Andernfalls wird die untere Teilhöhe des Laderaums um die Wannentiefe 43 vergrößert. Die Nutzfläche 25 des Ladebodenteils 21 liegt im wesentlichen in einer Ebene mit der Rückfläche 19 der Rückenlehne 12. Man erhält so eine durchgehende Gesamt-Ladeebene 45. Diese ladewirksame Abklapplage 21.2 des Ladebodenteils 21 kann, wie diejenige von Fig. 2, durch nicht näher gezeigte Arretierungen 35 im Fahrzeuginneren fixiert sein. Diese Arretierungen 35 mit ihren komplementären Arretierungsmitteln befinden sich beispielsweise im Endbereich des Ladebodenteils 21 einerseits und der fahrzeugseitigen festen Schulter 28 andererseits.

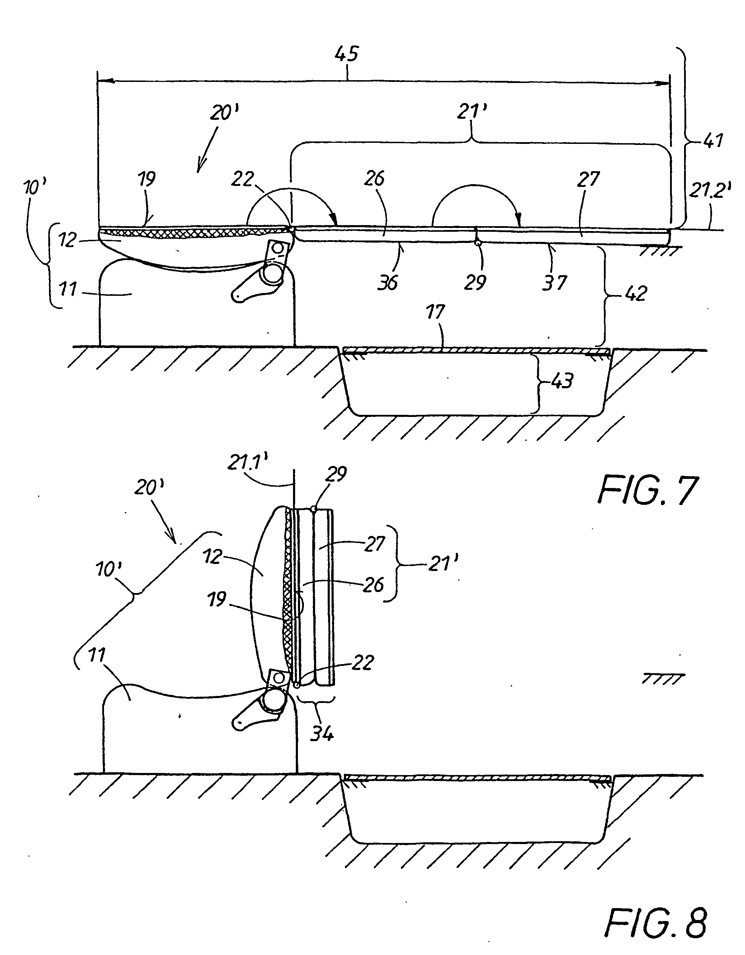

Das Scharnier 22 ist im ersten Aüsfuhrungsbeispiel im Übergangsbereich zwischen der Rückenlehne 12 und dem Sitzteil 11 positioniert. Dies gilt auch für das zweite Ausführungsbeispiel gemäß Fig. 7 und 8, welches demgegenüber in folgender Weise abgewandelt ist. Bei dieser Baueinheit 20' ist der Ladebodenteil 21' in zwei Teilböden 26, 27 gegliedert, die untereinander durch ein Hilfsscharnier 29 verbunden sind. In Fig. 7 ist wieder die Abklapplage 20.2' gezeigt. Dabei befinden sich die beiden Teilböden 26, 27 in einer Strecklage. Auch in diesem Fall ist, analog zur Fig. 4, die Rückenlehne 12 umgelegt, weshalb ihre Rückfläche 19 wieder eine durchgehende Gesamt-Ladeebene 45 im Bereich der oberen. Teilhöhe 41 des Laderaums bildet. Unterhalb des Ladebodenteils ist die entsprechende untere Laderaum-Teilhöhe 42 nutzbar, wobei wiederum durch Setzen oder Entfemen der dort befindlichen Abdeckung 17 der Laderaum um die Wannentiefe 43 bedarfsweise erhöht werden kann.

In Fig. 8 ist die gleiche Baueinheit 20' bei einer in Normalposition befindlichen aufgerichteten Rückenlehne 12 gezeigt. Ferner ist in diesem Fall der zweiteilige Ladebodenteil 21' in seine besondere Anklapplage 20,1' gebracht. In diesem Fall ist die in Fig. 7 erkennbare Nutzfläche des vorderen Teilbodens 26 in Berührung mit der Ruckfläche 19 der Rückenlehne 12 und der hintere Teilboden 27 in Berührung mit dem vorderen Teilboden 26. Die in Fig. 7 nach unten weisenden Unterflächen 36, 37 dieser beiden Teilböden 26, 27 liegen in Fig. 8 aneinander. Das Hilfsscharnier 29 ist von der 180°-Strecklage von Fig. 7 in eine 0°-Faltlage von Fig. 8 überführt worden. Es liegt eine lepbrelloartige Faltung vor. Hinter der Rückenfläche 19 der Rückenlehne 12 beendet sich in der Anklapplage von Fig. 8 ein kompaktes Bodenpaket 34.

Es versteht sich, dass der Ladebodenteil 21' auch noch in mehr als zwei Teilböden 26, 27 gegliedert sein könnte. Statt einer Gliederung des Ladebodenteils 21' in Längsrichtung des Fahrzeugs, wäre auch eine Teilung in Fahrzeug-Querrichtung möglich. Dabei könnte jeder Bodenabschnitt unabhängig vom anderen, jeweils für sich gegenüber der Rückenlehne 12 klappbeweglich sein. Sofern in diesem Fall der Sitz 10' des Ladebodenteils 21' von sich aus bereits in Abschnitte seiner Sitzlänge gegliedert ist, wird man die Längsteilung des Überlastbodens in einer der Sitzteilung entsprechender Weise vollziehen. Ebenso wäre es möglich, den Ladebodenteil 21 bzw. 21' nicht über die ganze Höhe der Rückenlehne 12 zu positionieren, sondern nur über einen Teilbereich, so dass mehrere Hilfsböden übereinander angeordnet sein könnten. Diese könnten dann ihrerseits wieder aus mehreren Teilböden bestehen, die ganz oder stufenweise aus ihrer Anklapplage 20.1' in eine Abklapplage 20.2' überführt werden können. Auf diese Weise lässt sich der Gesamt-Laderaum 40 in mehr als zwei Teilräume gliedern.

Die Fig. 5 und 6 zeigen einen vorteilhaften Aufbau eines solchen Ladebodenteils 21. Zunächst wird man, entsprechend ihrer unterschiedlichen Funktion, die Nutzfläche 25 gegenüber der anderen, in der Anklapplage 20.1 sichtbaren Zierfläche 24 unterschiedlich ausbilden. Die Nutzfläche 25 wird besonders fest ausgebildet, um den mechanischen Beanspruchungen durch das Ladegut gerecht zu werden. Die Zierfläche 24 dagegen ist stilistisch der Umgebung adaptiert. Für die bereits erwähnte gute Dämpfungsfunktion des Ladebodenteils 21 empfiehlt sich eine, mehrlagige Ausbildung, was insbesondere aus Fig. 6 zu ersehen ist: Es liegt ein Verbund 50 aus mehreren Schichten 51 bis 54 vor. Die oberste Schicht 51 liefert die Nutzfläche 25 und besteht aus z.B. kratzfestem Material. Dann kommt eine Tragelage 52, die formstabil ausgebildet ist. Dem folgt dann eine Polsterlage 53 aus Schaumstoff od. dgl., der sich schließlich dann eine Dekorlage 54 anschließt. Diese Dekorlage 54 kann vorteilhaft gleich um die Kanten gezogen sein, die Seitenbereiche 38 des Ladebodenteils 21 verkleiden und bis zur die Nutzfläche 25 erzeugenden obersten Schicht 51 reichen.

Zur Erhöhung der Dämpfungswirkungen kann man sowohl die Polsterlage 53 als auch die Traglage 52 ihrerseits in mehrere Unterschichten gliedern, wobei die Erkenntnisse des Aufbaus von Akustikeleinenten genutzt werden können. In der obersten Schicht 51 können verschiedene Funktionsteile integriert sein, die von der Nutzfläche 25 aus zugänglich sind. Solche Funktionsteile sind Reibstreifen zur Aufnahme des Ladeguts, Verzurrösen zur Ladesicherung des Ladeguts und Handhaben zur Klappbewegung des Ladebodenteils. Die Klappbewegung wird im letztgenannten Fall manuell erfolgen. Es versteht sich, dass natürlich auch Motoren die Bewegung des Ladebodenteils 21 über den kleinen Winkelbereich 46 von Fig. 2 oder den großen Winkelbereich 47 von Fig. 4 übernehmen könnten. In analoger Weise ist, wie bereits erwähnt wurde, auch eine motorische Neigungsverstellung der Rückenlehne 12 bzw. der Baugruppe aus Rückenlehne 12 und Ladebodenteil 21 gemäß Fig. 3 um den dortigen Neigungswinkel 38 möglich, der in Fig. 3 zu erkennen ist.

Aus Gründen geringem Gewichts und großer Formstabilität empfiehlt es sich die Traglage 52, wie aus Fig. 6 hervorgeht, z.B. mit einer Wabenstruktur 48 zu versehen. Im vorliegenden Fall geht man von einer in Wellenform gelegten Zwischenlage 49 aus, die sandwichartig zwischen zwei ebenen Platten 55, 56 integriert ist. Die obere Platte 55 trägt die das Ladegut aufnehmende oberste Schicht 51, während die untere Platte 56 zum Haltern der Polsterlage 53 dient.

### Bezugszeichenliste:

- 10: Sitz (Fig. 1 bis 4)
- 10': Sitz, (Fig. 7, 8)
- 11: Sitzflächenteil von 10 bzw. 10'
- 12: Rückenlehne von 10 bzw. 10'
- 13: Sitzfläche von 11
- 14: Anlehnfläche von 12
- 15: Fahrzeugboden
- 16: Wanne
- 17: Abdeckung von 16
- 18: Innenschulter in 16 für 17
- 19: Rückfläche von 12
- 20: Baueinheit aus 10, 21 (Fig. 1 bis 4)
- 20': Baueinheit aus 10, 21' (Fig. 7, 8)
- 21: Ladebodenteil (Fig. 1 bis 4)
- 21': Ladebodenteil (Fig. 7, 8)
- 21.1: Anklapplage von 21 an 12 (Fig. 1, 3)
- 21.2: Abklapplage von 21 gegenüber 12 (Fig. 2, 4)
- 21.1': Abklapplage von 21' gegenüber 12 (Fig. 7)
- 21.2': Abklapplage von 21' gegenüber 12 (Fig. 7)
- 22: Scharnier zwischen 12, 21 bzw. 12, 21'
- 23: horizontale Klappachse von 22 für 21 (Fig. 5)
- 24: Zierfläche von 21
- 25: Nutzfläche von 21
- 26: vorderer Teilboden von 21' (Fig. 7)
- 27: hinterer Teilboden von 21' (Fig. 7)
- 28: Stützschulter für 21 (Fig. 2)
- 29: Hilfsscharnier zwischen 26, 27 (Fig. 7, 8)
- 30: Haltemittel für 21 an 12 (Fig. 1)
- 31: Gelenkbeschlag zwischen 12, 11 (Fig. 3)
- 32: Gelenkachse von 31
- 33: Handhabe für 31
- 34: Bodenpaket aus 26, 27 in Faltlage (Fig. 8)
- 35: Arretierung zwischen 21, 28 (Fig. 4)
- 36: Unterfläche von 26 (Fig. 7)
- 37: Unterfläche von 27 (Fig. 7)
- 38: Seitenbereich von 21 (Fig. 6)
- 39: Neigungswinkel von 12 bzw. 12, 21 (Fig. 3)
- 40.: Gesamt-Laderaum
- 41: obere Teilhöhe von 40
- 42: untere Teilhöhe von 40
- 43: Wannentiefe
- 44: maximale Ladehöhe
- 45: Gesamt-Ladeebene (Fig. 4)
- 46: kleiner Klappwinkel von 21 (Fig. 2)
- 47: großer Klappwinkel von 21 (Fig. 4)
- 48: Wabenstruktur von 52 (Fig. 6)
- 49: wellenförmige Zwischenlage von 51 (Fig. 6)
- 50: Verbund für 21 (Fig. 6)
- 51: oberste Schicht von 25 (Fig. 6)
- 52: Tragelage (Fig. 6)
- 53: Polsterlage (Fig. 6)
- 54: Dekorlage (Fig. 6)
- 55: oberste Platte von 51 (Fig. 6)
- 56: untere Platte von 51 (Fig. 6)

## Patentansprüche

1. Vorrichtung zur Teilung des hinter einem Sitz befindlichen Laderaums (40) in einem Fahrzeug, insbesondere in einem Pkw,
wobei der Sitz (10) einerseits aus einem Sitzflächenteil (11) und andererseits aus einer Rückenlehne (12) besteht, die über eine Gelenkachse (32) mit dem Sitzflächenteil (11) verbunden ist,
mit einem als Ladeboden fungierenden Teil (Ladebodenteil 21), der über ein Scharnier (22) an der Rückseite der Rückenlehne (12) befestigt ist und eine Baueinheit (20) mit dem Sitz (10) bildet,
wobei das Scharnier (22) den Ladebodenteil (21) gegenüber dem Sitz (10) zwischen einer ladeunwirksamen und einer ladewirksamen Position klappbeweglich macht,
und mit Stützmitteln, welche in der ladewirksamen Position den Ladebodenteil (21) gegenüber der Rückenlehne (12) in einem definierten Höhenabstand zum Fahrzeugboden (15) positionieren,
wobei der Ladebodenteil (21) eine Nutzfläche (25) aufweist, auf welche in der ladewirksamen Position eine Ladung im Fahrzeug platziert werden kann,
**dadurch gekennzeichnet ,**
**dass** das Scharnier (22) vom Ladebodenteil (21) an der im Bereich der Gelenkachse (32) des Sitzes (10) befindlichen Unterkante der Rückenlehne (12) angeordnet ist,
**dass** der über das Scharnier (22) mit der Rückenlehne (19) verbundene Ladebodenteil (21) eine vormontierbare Baueinheit (20) mit dem Sitz (10) bildet,
**dass** die Nutzfläche (25) vom Ladebodenteil (21) in der unwirksamen Position zur Rückenfläche (19) der Rückenlehne (12) gerichtet und unsichtbar ist, was eine Anklapplage des Ladebodenteils (21) bestimmt,
aber in der wirksamen Position sich in einer sichtbaren Abklapplage befindet, wo sowohl die Nutzfläche (25) vom Ladebodenteil (21) als auch die Rückfläche (19) der Rücklehne (12) frei liegen und den Gesamt-Laderaum (40) gegenüber dem Fahrzeugboden (15) in zwei übereinander liegende Teilräume (41, 42) gliedern,
und **dass** die Stützmittel aus ortsfesten Stützschultern (28) an einer Innenwand des Fahrzeugs bestehen, an denen sich der Ladebodenteil (21) in der Abklapplage abstützt.

2. Vorrichtung nach Anspruch 1, **dadurch gekennzeichnet, dass** die in Anklapplage (21.1) unsichtbare, aber in Abklapplage (21.2) die Ladung aufnehmende Nutzfläche (25) gegenüber der anderen, in Anklapplage (21.1) sichtbaren Zierfläche (24) des Ladebodenteils (21) unterschiedlich ausgebildet ist,
wobei die Nutzfläche (25) mechanisch fest und die Zierfläche (24) stilistisch adaptiert sind.

3. Vorrichtung nach einem der Ansprüche 1 oder 2, **dadurch gekennzeichnet, dass** der Ladebodenteils (21) mehrlagig ausgebildet ist und diese Lagen (51 bis 54) zu einem Verbund (50) zusammengeführt sind,
wobei, in Abklapplage (21.2) des Ladebodenteils (21), die Nutzfläche (25) die oberste Schicht (51) in einer formstabilen Tragelage (52) bildet und die Zierfläche (24) die unterste Schicht eine Dekorlage (54) ist.

4. Vorrichtung nach Anspruch 3, **dadurch gekennzeichnet, dass** zwischen der Tragelage (52) und der Dekorlage (54) einer Polsterlage (53) angeordnet ist, welche akustische Dämpfungseigenschaften hat.

5. Vorrichtung nach Anspruch 3 oder 4, **dadurch gekennzeichnet, dass** die Nutzfläche (25) des Ladebodenteils (21) mit Funktionsteilen versehen ist, wie Reibstreifen, Verzurrösen, Handhaben od. dgl..

6. Vorrichtung nach einem der Ansprüche 3 bis 5, **dadurch gekennzeichnet, dass** die Tragelage (52) eine Wabenstruktur (48) besitzt.

7. Vorrichtung nach einem der Ansprüche 1 bis 6, **dadurch gekennzeichnet, dass** die ladewirksame Abklapplage (21.2) des Ladebodenteils (21) durch eine Arretierung (35) im Fahrzeuginneren fixiert ist.

8. Vorrichtung nach einem der Ansprüche 1 bis 7, **dadurch gekennzeichnet, dass** die Rückenlehne (12) aus einer Sitzfunktion, wo die Rückenlehne (12) einen Winkel gegenüber dem Sitzflächenteil (11) einnimmt, in eine Ladefunktion verschwenkbar ist, wo die Rückenlehne (12) mit ihrer Anlehnfläche (14) sich an der Sitzfläche (13) vom Sitzflächenteil (11) abstützt,
und dass bei dieser Ladefunktion die Rückfläche (19) der umgelegten Rückenlehne (12) zusammen mit der Nutzfläche (25) vom Ladebodenteil (21) eine im wesentlichen durchgehenden Gesamt-Ladeebene (45) bilden.

9. Vorrichtung nach einem der Ansprüche 1 bis 8, **dadurch gekennzeichnet, dass** das Umriss- und/oder Höhenprofil des Ladebodenteils (21) in der Anklapplage (21.1) den räumlichen Formen im Sitzbereich und/oder in der Abklapplage (21.2) der Karosserieform im Laderaum (40) angepasst sind.

10. Vorrichtung nach einem der Ansprüche 1 bis 9, **dadurch gekennzeichnet, dass** - in Fahrzeuglängsrichtung gesehen - der Ladebodenteil (21') aus mindestens zwei Teilböden (26, 27) zusammengesetzt ist,
dass die Teilböden (26, 27) untereinander durch Hilfsscharniere (29) verbunden sind.

11. Vorrichtung nach Anspruch 10, **dadurch gekennzeichnet, dass** die Gliederung des Ladebodenteils (21') in die Abschnitte konform mit einer Längsteilung des Sitzes (10') ausgebildet ist.

12. Vorrichtung nach einem der Ansprüche 1 bis 11, **dadurch gekennzeichnet, dass** unterhalb und/oder oberhalb des in seiner Abklapplage (21.2) befindlichen Ladebodenteils (21) wenigstens ein weiterer Hilfsboden angeordnet ist
und dass dieser Hilfsboden einerseits und der Ladebodenteil (21) andererseits den Gesamt-Laderaum (40) des Fahrzeugs in mehrere Teilräume gliedern.

## Claims

1. Apparatus for dividing up the loadspace (40) located behind a seat in a vehicle, particularly in a motor car,
wherein the seat (10) consists of a seat section (11) on the one hand and a backrest (12) on the other hand, which is connected to the seat section (11) by an articulation spindle (32),
with a part acting as the loading base (loading base part 21) which is attached to the rear surface of the backrest (12) via a hinge (22) and forms a structural unit (20) with the seat (10),
the hinge (22) enabling the loading base part (21) to fold relative to the seat (10) between a position unsuitable for loading and a position adapted for loading,
and with support means, which in the position adapted for loading position the loading base part (21) relative to the backrest (12) at a defined vertical spacing from the floor (15) of the vehicle,
the loading base part (21) having a utility surface (25) on which, in the position adapted for loading, a load can be placed in the vehicle,
**characterised in that**
the hinge (22) of the loading base part (21) is arranged on the lower edge of the backrest (12) located in the region of the articulation spindle (32) of the seat (10),
**in that** the loading base part (21) connected to the backrest (19) via the hinge (22) forms a structural unit (20) with the seat (10) which can be preassembled,
**in that** the utility surface (25) of the loading base part (21) is directed towards the rear surface (19) of the backrest (12) in the ineffective position and is invisible, thus determining a folded-up position of the loading base part (21),
but in the effective position is located in a visible folded-out position in which both the utility surface (25) of the loading base part (21) and the rear surface (19) of the backrest (12) are exposed and divide the total loadspace (40) relative to the vehicle floor (15) into two compartments (41, 42) arranged one above the other,
and **in that** the support means consist of fixed support shoulders (28) on an inner wall of the vehicle, on which the loading base part (21) is supported in the folded-out position.

2. Apparatus according to claim 1, **characterised in that** the utility surface (25) which is invisible in the folded-up position (21.1) but accommodates the load in the folded-out position (21.2) is constructed differently from the other decorative surface (24) of the loading base part (21) which is visible in the folded-up position (21.1), while the utility surface (25) is mechanically solid and the decorative surface (24) is of matching style.

3. Apparatus according to one of claims 1 or 2, **characterised in that** the loading base part (21) is of multi-layer construction and these layers (51 to 54) are combined to form a composite unit (50),
while, in the folded-out position (21.2) of the loading base part (21), the utility surface (25) forms the uppermost layer (51) in a dimensionally stable carrying layer (52) and the decorative surface (24) is the bottom layer of a decorative layer (54).

4. Apparatus according to claim 3, **characterised in that** between the carrying layer (52) and the decorative layer (54) is provided an upholstery layer (53) which has acoustic damping properties.

5. Apparatus according to claim 3 or 4, **characterised in that** the utility surface (25) of the loading base part (21) is provided with functional parts such as friction strips, securing eyelets, handles or the like.

6. Apparatus according to one of claims 3 to 5, **characterised in that** the carrying layer (52) has a honeycomb structure (48).

7. Apparatus according to one of claims 1 to 6, **characterised in that** the folded-out position (21.2) of the loading base part (21) adapted for loading is fixed in the interior of the vehicle by stop means (35).

8. Apparatus according to one of claims 1 to 7, **characterised in that** the backrest (12) can be pivoted from a seating function in which the backrest (12) is at an angle to the seat section (11), into a loading function in which the backrest (12) with its reclining surface (14) is supported on the sitting surface (13) of the seat section (11),
and **in that** in this loading function the rear surface (19) of the folded-down backrest (12) forms, together with the utility surface (25) of the loading base part (21), a substantially continuous total loading plane (45).

9. Apparatus according to one of claims 1 to 8, **characterised in that** the outline and/or vertical profile of the loading base part (21) is adapted to the spatial shapes in the seating area when in the folded-up position (21.1) and/or to the shape of the vehicle body in the loadspace (40) when in the folded-out position (21.2).

10. Apparatus according to one of claims 1 to 9, **characterised in that** the loading base part (21') is made up of at least two base sections (26, 27), viewed in the longitudinal direction of the vehicle,
and **in that** the base sections (26, 27) are joined together by auxiliary hinges (29).

11. Apparatus according to claim 10, **characterised in that** the dividing up of the loading base part (21') into the sections is designed to conform to a longitudinal division of the seat (10').

12. Apparatus according to one of claims 1 to 11, **characterised in that** at least one other auxiliary base is provided underneath and/or above the loading base part (21) which is in its folded-out position (21.2),
and **in that** this auxiliary base on the one hand and the loading base part (21) on the other hand divide the total loadspace (40) of the vehicle into a plurality of compartments.

## Revendications

1. Dispositif pour diviser l'espace à bagage (40) se trouvant derrière un siège, dans un véhicule, en particulier un véhicule de tourisme,
le siège (10) étant formé, d'une part, d'une partie de surface d'assise (11) et, d'autre part, d'un dossier (12), relié à la partie de surface d'assise (11) par un axe d'articulation (32),
avec une partie (partie de fond de chargement 21) servant de fond de chargement, fixée, par une charnière (22), sur la face arrière du dossier (12) et formant un ensemble de construction (20) avec le siège (10),
la charnière (22) rendant mobile en rabattement la partie de fond de chargement (21) par rapport au siège (10), entre une position inactive pour le chargement et une position active pour le chargement,
et avec des moyens d'appui qui, à la position active pour le chargement, positionnent la partie de fond de chargement (21) par rapport au dossier (12), à un espacement en hauteur défini par rapport au fond du véhicule (15),
la partie de fond de chargement (21) présentant une face utile (25), sur laquelle un chargement peut être placé dans le véhicule lorsque l'on se trouve à la position active pour le chargement,
**caractérisé en ce que**
la charnière (22) de la partie de fond de chargement (21) est disposée sur l'arête inférieure, se trouvant dans la zone de l'axe d'articulation (32) du siège (10), du dossier (12),
**en ce que** la partie de fond de chargement (21), reliée au dossier (19) par la charnière (22), forme avec le siège (10) un ensemble de construction (20) susceptible d'être prémonté,
**en ce que** la face utile (25) de la partie de fond de chargement (21), à la position inactive, est orientée par rapport à la face arrière (19) du dossier (12) et est invisible, ce qui détermine une position de plaquage rabattu de la partie de fond de chargement (21),
mais, à la position active, elle se trouve en une position de dégagement par rabattement, visible, à laquelle, tant la face utile (25) de la partie de fond de chargement (21), qu'également la face arrière (19) du dossier (12) sont libres et décomposent l'ensemble de l'espace à bagages (40) en deux espaces partiels (41,42), situés l'un ati-dessus de l'autre par rapport au plancher de véhicule (15),
et **en ce que** les moyens d'appui sont formés d'épaulements d'appui (28) localement fixes sur une paroi intérieure du véhicule, épaulements d'appui sur lesquels la partie de fond de chargement (21) prend appui lorsqu'on est à la position dégagée par rabattement.

2. Dispositif selon la revendication 1, **caractérisé en ce que** la face utile (25), invisible à la position plaquée par rabattement (21.1) mais supportant le chargement lorsqu'elle est à la position dégagée par rabattement (21.2), est réalisée différemment de l'autre face décorative (24), visible lorsqu'on est à la position plaquée par rabattement (21.1), de la partie de fond de chargement (21),
la face utile (25) étant mécaniquement rigide et la face décorative (24) étant adaptée stylistiquement.

3. Dispositif selon l'une des revendications 1 ou 2, **caractérisé en ce que** la partie de fond de chargement (21) est à plusieurs couches et ces couches (51 à 54) sont regroupées en un composite (50),
où, à la position dégagée par rabattement (21.2) de la partie de fond de chargement (21), la face utile (25) forme la couche la plus haute (51, en une position d'emport (52) à stabilité de forme, et la face décorative (24) est la couche la plus basse, une couche décorative (54).

4. Dispositif selon la revendication 3, **caractérisé en ce que**, entre la couche support (52) et la couche de décor (54), est disposée une couche de rembourrage (53) ayant des propriétés d'amortissement acoustique.

5. Dispositif selon la revendication 3 ou 4, **caractérisé en ce que** la face utile (25) de la partie de fond de chargement (21) set munie de parties fonctionnelles telles que des bandes à friction, des oeillets de sanglage, des poignets ou analogue.

6. Dispositif selon l'une des revendications 3 à 5, **caractérisé en ce que** la couche support (52) présente une structure en nids d'abeille (48).

7. Dispositif selon l'une des revendications 1 à 6, **caractérisé en ce que** la position dégagée par rabattement (21.2), active pour le chargement, de la partie de fond de chargement (21) est fixée par un dispositif de fixation (35) à l'intérieur du véhicule.

8. Dispositif selon l'une des revendications 1 à 7, **caractérisé en ce que** le dossier (12) est susceptible de pivoter d'une fonction de siège, à laquelle le dossier (12) fait un certain angle par rapport à la partie de surface d'assise (11), en une fonction de chargement, à laquelle le dossier (12) prend appui, par sa face d'appui (14), sur la face d'assise (13) de la partie de face d'assise (11),
et **en ce que**, lors de cette fonction de chargement, la face arrière (19) du dossier (12) rabattu forme, conjointement avec la face utile (25) de la partie de fond de chargement (21), un plan de chargement global (45) sensiblement continu.

9. Dispositif selon l'une des revendications 1 à 8, **caractérisé en ce que** le profil de contour et/ou de hauteur de la partie de fond de chargement (21), à la position plaquée par rabattement (21.1), est adapté aux formes spatiales dans la zone d'assise et/ou, à la position dégagée par rabattement (21.2), est adapté à la forme de carrosserie dans l'espace à bagages (40).

10. Dispositif selon l'une des revendications 1 à 9, **caractérisé en ce que** - en observant dans la direction longitudinale du véhicule - la partie fond de chargement (21') est composée d'au moins deux fonds partiels (26,27)
**en ce que** les fons partiels (26,27) sont reliés entre eux par des charnières auxiliaires (29).

11. Dispositif selon la revendication 10, **caractérisé en ce que** la décomposition articulée de la partie de fond de chargement (21') en les tronçons est conforme à une division longitudinale du siège (10').

12. Dispositif selon l'une des revendications 1 à 11, **caractérisé en ce qu'**au-dessous et/ou au-dessus de la partie de fond de chargement (21) se trouvant à la position dégagée par rabattement (21.2) est disposé au moins un autre fond auxiliaire
et **en ce que** ce fond auxiliaire, d'une part, et la partie de fond de chargement (21), d'autre part, décomposent l'espace de chargement global (40) du véhicule en plusieurs espaces partiels.
